# EUROPEAN PATENT APPLICATION

(11) **EP 4 679 688 A1**
(43) Date of publication of application: **14.01.2026**
(21) Application number: 24909219.8
(22) Date of filing: 12.12.2024
(51) Int. Cl.: H02K 29/08, B66F 11/04, H02K 7/06, H02K 11/38

(54) **BRUSHLESS MOTOR AND POSITIONING AND STEERING CONTROL METHOD THEREOF, AND AERIAL WORK PLATFORM**

(30) Priority: 09.05.2024 CN 202410565160
(71) Applicant: Lingong Heavy Machinery Co., Ltd., Jinan, Shandong 250101 (CN)
(72) Inventor: SUN, Guangpeng, Jinan, Shandong 250101 (CN); WANG, Dehong, Jinan, Shandong 250101 (CN); ZHANG, Zhaoliang, Jinan, Shandong 250101 (CN); GUO, Bing, Jinan, Shandong 250101 (CN); XIE, Bin, Jinan, Shandong 250101 (CN)
(74) Representative: Murgitroyd & Company
(86) International application number: PCT/CN2024/138842
(87) International publication number: WO 2025/232196

(57) **Abstract**

The present invention discloses a brushless motor and a positioning and steering control method thereof, and an aerial work vehicle. The brushless motor comprises a motor controller, a brushless motor body, a steering cylinder, a Hall sensor, a first micro limit switch and a second micro limit switch. The first and second micro limit switches are disposed at first and second stroke positions of a ball screw in the steering cylinder, respectively, and are both communicatively connected with the motor controller. Upon receiving the switch signals output by the first and second micro limit switches, the motor controller respectively controls the brushless motor body to stop driving the ball screw to move in a first direction or a second direction. The Hall sensor detects a revolution of the brushless motor body in real time, and sends the revolution to the motor controller. The motor controller also controls the brushless motor body to stop driving the ball screw to move in the first direction or second direction when the revolution reaches a first preset revolution or a second preset revolution, wherein the first preset revolution is determined according to the first stroke and a preset ball screw motion relationship, and the second preset revolution is determined according to the second stroke and the preset ball screw motion relationship.

## Description

### FIELD

Embodiments of the present invention relate to the technical field of brushless motors, and particularly, to a brushless motor and a positioning and steering control method thereof, and an aerial work vehicle.

### BACKGROUND

Currently, steering devices used in aerial work platforms in the prior art are all implemented through a traditional hydraulic power or a brushed motor. The hydraulic power steering requires a separate engine as the power unit, which occupies a large space, is unlikely to adapt to precise layout, consumes a lot of power and is often confronted with routine maintenance due to condition such as oil leakage, and is even less suitable for special work environments such as high temperature, high voltage and laboratories. On the other hand, brushed motors suffer from shorter lifespans, generally requiring carbon brush replacement every 1-3 years. They generate noise during operation, do not have a very high rotational speed due to intrinsic technical limitations of the structure, and are unlikely to adapt to fast and precise working environments. Furthermore, because of the mounting position of the steering device, each replacement wastes a lot of time, and use is limited in special working environments such as mining tunnels.

At present, in the aerial special work scenarios, brushless motors have not yet been used for operation, the steering and positioning control technologies of brushless motors in high-speed special working scenarios are not very mature, and brushless motor devices with a positioning and steering control function have not yet occurred.

### SUMMARY

The present invention provides a brushless motor and a positioning and steering control method thereof, and an aerial work vehicle, to adapt to the steering and positioning control in special aerial work scenarios, and meanwhile achieve more precise steering and positioning control of the brushless motor.

In order to achieve the above object, in a first aspect, an embodiment of the present invention provides a brushless motor comprising a motor controller, a brushless motor body, a steering cylinder, a Hall sensor, a first micro limit switch and a second micro limit switch.

The motor controller is electrically connected to the brushless motor body, the brushless motor body is in meshing connection with the steering cylinder, the first micro limit switch is provided at a first stroke position of a ball screw in the steering cylinder, the second micro limit switch is provided at a second stroke position of the ball screw.

The first micro limit switch and the second micro limit switch are both communicatively connected with the motor controller, the motor controller is configured to control the brushless motor body to stop driving the ball screw to move in a first direction upon receiving a switch signal output by the first micro limit switch, the motor controller is further configured to control the brushless motor body to stop driving the ball screw to move in a second direction upon receiving a switch signal output by the second micro limit switch.

The Hall sensor is communicatively connected to the motor controller, the Hall sensor is configured to detect a revolution of the brushless motor body in real time, and send the revolution to the motor controller.

The motor controller is further configured to control the brushless motor body to stop driving the ball screw to move in the first direction when the revolution reaches a first preset revolution, wherein the first preset revolution is determined according to the first stroke and a preset ball screw motion relationship.

The motor controller is further configured to control the brushless motor body to stop driving the ball screw to move in the second direction when the revolution reaches a second preset revolution, wherein the second preset revolution is determined according to the second stroke and the preset ball screw motion relationship.

Optionally, controlling, by the motor controller, the brushless motor body to stop driving the ball screw to move in the first direction when the revolution reaches the first preset revolution comprises:

the motor controller is further configured to control the brushless motor body to reduce the rotation speed based on a ramp control strategy according to a first preset revolution range so as to control the brushless motor body to stop driving the ball screw to move in the first direction when the revolution reaches the first preset revolution, wherein the first preset revolution range satisfies: (1-1/N1)n1≤n≤n1, wherein n1 is the first preset revolution, and N1 is determined based on the first preset revolution n1;

controlling, by the motor controller, the brushless motor body to stop driving the ball screw to move in the second direction when the revolution reaches the second preset revolution comprises:

the motor controller is further configured to control the brushless motor body to reduce the rotation speed based on the ramp control strategy according to a second preset revolution range so as to control the brushless motor body to stop driving the ball screw to move in the second direction when the revolution reaches the second preset revolution, wherein the second preset revolution range satisfies: (1-1/N2)n2≤n≤n2, wherein n2 is the second preset revolution, and N2 is determined based on the second preset revolution n2.

Optionally, the controlling, by the motor controller, the brushless motor body to reduce the rotation speed based on a ramp control strategy according to a first preset revolution range so as to control the brushless motor body to stop driving the ball screw to move in the first direction when the revolution reaches the first preset revolution comprises:
controlling, by the motor controller, the rotation speed of the brushless motor body to fall to a first preset rotation speed when the revolution reaches a third preset revolution range, wherein the third preset revolution range satisfies: (1-1/N1)n1 ≤n≤(1-1/(N1+X))n1, and X is a positive integer greater than N1;
controlling, by the motor controller, the rotation speed of the brushless motor body to fall to a second preset rotation speed when the revolution reaches a fourth preset revolution range, wherein the fourth preset revolution range satisfies: (1-1/(N1+X))n1<n≤n1; and

The motor controller is further configured to control the rotation speed of the brushless motor body to drop to zero when the revolution reaches the first preset revolution so as to control the brushless motor body to stop driving the ball screw to move in the first direction.

The second preset rotation speed is less than the first preset rotation speed.

Optionally, controlling, by the motor controller, the brushless motor body to reduce the rotation speed based on the ramp control strategy according to a second preset revolution range so as to control the brushless motor body to stop driving the ball screw to move in the second direction when the revolution reaches the second preset revolution comprises:
controlling, by the motor controller, the rotation speed of the brushless motor body to fall to a third preset rotation speed when the revolution reaches a fifth preset revolution range, wherein the fifth preset revolution range satisfies: (1-1/N2)n2≤n≤(1-1/(N2+X))n2, and X is a positive integer greater than N2;
controlling, by the motor controller, the rotation speed of the brushless motor body to fall to a fourth preset rotation speed when the revolution reaches a sixth preset revolution range, wherein the six preset revolution range satisfies: (1-1/(N2+X))n2 < n≤n2; and
controlling, by the motor controller, the rotation speed of the brushless motor body to drop to zero when the revolution reaches the second preset revolution so as to control the brushless motor body to stop driving the ball screw to move in the second direction.

The fourth preset rotation speed is less than the third preset rotation speed.

Optionally, the device further comprises a current detection module.

The current detection module is communicatively connected to the motor controller, the current detection module is configured to detect an output current of the brushless motor body in real time and send the output current to the motor controller.

Or the motor controller is further configured to control the brushless motor body to stop driving the ball screw to move when the output current reaches a maximum limit current;

the motor controller is further configured to control the brushless motor body to stop driving the ball screw to move after the output current reaches a maximum operating current for a preset period of time.

In a second aspect, an embodiment of the present invention further provides an aerial work vehicle comprising the brushless motor according to the first aspect.

In a third aspect, an embodiment of the present invention further provides a positioning and steering control method of a brushless motor, which is applied to the brushless motor according to the first aspect, the positioning and steering control method of the brushless motor comprises:
acquiring a preset ball screw motion relationship;
a Hall sensor detects a revolution of the brushless motor body in real time, and sends the revolution to the motor controller, the first micro limit switch senses the ball screw at the first stroke position, the second micro limit switch senses the ball screw provided at the second stroke position;
when the revolution reaches a first preset revolution, the motor controller controls the brushless motor body to stop driving the ball screw to move in a first direction, wherein the first preset revolution is determined according to the first stroke and the preset ball screw motion relationship;
when the revolution reaches a second preset revolution, the motor controller controls the brushless motor body to stop driving the ball screw to move in a second direction, wherein the second preset revolution is determined according to the second stroke and the preset ball screw motion relationship;
or, upon receiving a switch signal output by the first micro limit switch, the motor controller controls the brushless motor body to stop driving the ball screw to move in the second direction;
upon receiving a switch signal output by the second micro limit switch, the motor controller controls the brushless motor body to stop driving the ball screw to move in the second direction.

Optionally, the method further comprises:
the current detection module detects an output current of the brushless motor body in real time and sends the output current to the motor controller;
when the output current reaches a maximum limit current, the motor controller controls the brushless motor body to stop driving the ball screw to move;
the positioning and steering control method of the brushless motor further comprises:
after the output current reaches a maximum operating current for a preset period of time, the motor controller controls the brushless motor body to stop driving the ball screw to move.

Optionally, controlling, by the motor controller, the brushless motor body to stop driving the ball screw to move in the first direction when the revolution reaches the first preset revolution comprises:
controlling the brushless motor body to reduce the rotation speed based on a ramp control strategy according to a first preset revolution range so as to control the brushless motor body to stop driving the ball screw to move in the first direction when the revolution reaches the first preset revolution, wherein the first preset revolution range satisfies: (1-1/N1)n1≤n≤ n1, wherein n1 is the first preset revolution, and N1 is determined based on the first preset revolution n1;
controlling, by the motor controller, the brushless motor body to stop driving the ball screw to move in the second direction when the revolution reaches the second preset revolution comprises:
the motor controller is further configured to control the brushless motor body to reduce the rotation speed based on the ramp control strategy according to a second preset revolution range so as to control the brushless motor body to stop driving the ball screw to move in the second direction when the revolution reaches the second preset revolution, wherein a second preset revolution range satisfies: (1-1/N2)n2≤n≤n2, wherein n2 is the second preset revolution, and N2 is determined based on the second preset revolution n2.

Optionally, controlling the brushless motor body to reduce the rotation speed based on a ramp control strategy according to a first preset revolution range so as to control the brushless motor body to stop driving the ball screw to move in the first direction when the revolution reaches the first preset revolution comprises:
controlling the rotation speed of the brushless motor body to fall to a first preset rotation speed when the revolution reaches a third preset revolution range, wherein the third preset revolution range satisfies: (1-1/N1)n1≤n≤(1-1/(N1+X))n1, and X is a positive integer greater than N1;
controlling the rotation speed of the brushless motor body to fall to a second preset rotation speed when the revolution reaches a fourth preset revolution range, wherein the fourth preset revolution range satisfies: (1-1/(N1+X))n1<n≤n1; and
controlling the rotation speed of the brushless motor body to drop to zero when the revolution reaches the first preset revolution so as to control the brushless motor body to stop driving the ball screw to move in the first direction;
wherein the second preset rotation speed is less than the first preset rotation speed;
controlling the brushless motor body to reduce the rotation speed based on the ramp control strategy according to a second preset revolution range so as to control the brushless motor body to stop driving the ball screw to move in the second direction when the revolution reaches the second preset revolution comprises:
controlling the rotation speed of the brushless motor body to fall to a third preset rotation speed when the revolution reaches a fifth preset revolution range, wherein the fifth preset revolution range satisfies: (1-1/N2)n2≤n≤(1-1/(N2+X))n2, and X is a positive integer greater than N2;
controlling the rotation speed of the brushless motor body to fall to a fourth preset rotation speed when the revolution reaches a sixth preset revolution range, wherein the six preset revolution range satisfies: (1-1/(N2+X))n2 < n≤n2; and
controlling the rotation speed of the brushless motor body to drop to zero when the revolution reaches the second preset revolution so as to control the brushless motor body to stop driving the ball screw to move in the second direction;
wherein the fourth preset rotation speed is less than the third preset rotation speed.

In the embodiments of the present invention, the steering and positioning control of precisely controlling the brushless motor body to drive the ball screw to move in different directions is achieved through the revolution detected by the Hall sensor, and the steering and positioning control of controlling the brushless motor body to drive the ball screw to move in different directions is jointly achieved by the revolution detected by the Hall sensor in combination with the switch signal output by the first micro limit switch and the switch signal output by the second micro limit switch, thereby improving the reliability of steering and positioning in different directions, and avoiding failure to achieve steering and positioning in different directions upon fault in any manner.

### BRIEF DESCRIPTION OF THE DRAWINGS

FIG. 1 is a schematic view of a brushless motor according to an embodiment of the present invention;
FIG. 2 is a schematic view of a steering cylinder according to an embodiment of the present invention;
FIG. 3 is a schematic view of another brushless motor according to an embodiment of the present invention;
FIG. 4 is a flow chart of a positioning and steering control method of a brushless motor according to an embodiment of the present invention;
FIG. 5 is a flow chart of another positioning and steering control method of a brushless motor according to an embodiment of the present invention.

### DETAILED DESCRIPTION OF EMBODIMENTS

The present invention will be described in further detail with reference to the accompanying drawings and embodiments. It may be appreciated that specific embodiments described herein are only intended to illustrate the present invention, not to limit the present invention. It should also be noted that, for ease of description, only some, but not all, of the structures related to the present invention are shown in the drawings.

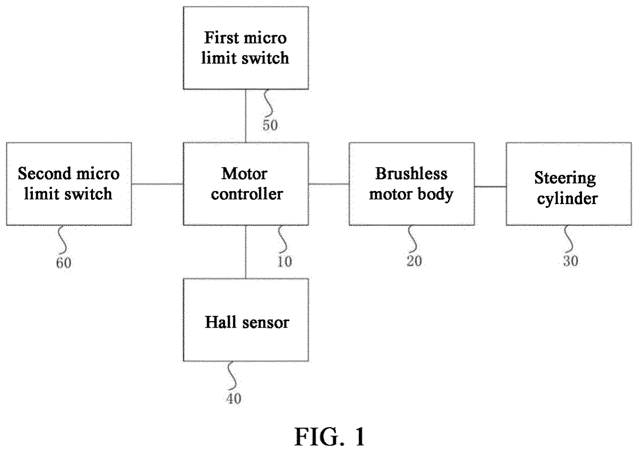

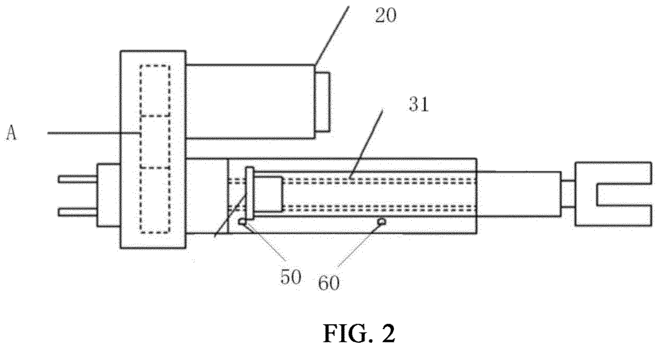

FIG. 1 is a schematic view of a brushless motor according to an embodiment of the present invention. FIG. 2 is a schematic view of a steering cylinder according to an embodiment of the present invention. As shown in FIGS. 1-2, the brushless motor comprises a motor controller 10, a brushless motor body 20, a steering cylinder 30, a Hall sensor 40, a first micro limit switch 50 and a second micro limit switch 60.

The motor controller 10 is electrically connected to the brushless motor body 20. The brushless motor body 20 and the steering cylinder 30 are in meshing connection via a gear set A. The first micro limit switch 50 is provided at a first stroke position L1 of a ball screw 31 in the steering cylinder 30. The second micro limit switch 60 is provided at a second stroke position L2 of the ball screw 31.

The first micro limit switch 50 and the second micro limit switch 60 are both communicatively connected with the motor controller 10. The motor controller 10 is configured to control the brushless motor body 20 to stop driving the ball screw 31 to move in a first direction upon receiving a switch signal output by the first micro limit switch 50, and is further configured to control the brushless motor body 20 to stop driving the ball screw 31 to move in a second direction upon receiving a switch signal output by the second micro limit switch 60.

The Hall sensor 40 is communicatively connected to the motor controller 10, and is configured to detect a revolution of the brushless motor body 20 in real time, and send the revolution to the motor controller 10.

The motor controller 10 is further configured to control the brushless motor body 20 to stop driving the ball screw 31 to move in the first direction when the revolution reaches a first preset revolution, wherein the first preset revolution is determined according to the first stroke and a preset ball screw motion relationship.

The motor controller 10 is further configured to control the brushless motor body 20 to stop driving the ball screw 31 to move in the second direction when the revolution reaches a second preset revolution, wherein the second preset revolution is determined according to the second stroke and the preset ball screw motion relationship.

Specifically, in an aerial special operation scenario, such as a scissor lift operation scenario, the brushless motor body 20 and the steering cylinder 30 are connected through gear transmission to form a steering action unit, and the steering action unit is connected to a tire linkage in the actual operation scenario. During the actual tire rotation, the motor controller 10 provides a motion driving current to the brushless motor body 20 to enable the brushless motor body 20 to drive the ball screw 31 in the steering cylinder 30 to make a telescopic motion, thereby driving the tires to make a steering motion. Generally, the brushless motor body 20 drives the ball screw 31 in the steering cylinder 30 to make an extension movement, to drive the tires to make a leftward steering motion, wherein when a maximum extension distance is reached, the leftward steering of the tires reaches a maximum angle. The brushless motor body 20 drives the ball screw 31 in the steering cylinder 30 to make a retraction motion, to drive the tires to make a rightward steering motion. When a maximum retraction distance is reached, the rightward steering of the tires reaches a maximum angle. Considering that the working space is limited and the working environment is severe in the aerial special working scenario, there are high requirements for the positioning control precision of the maximum angle of leftward steering and rightward steering of the tires.

In the present embodiment, the first micro limit switch 50 is provided at the first stroke position L1 of the ball screw 31 in the steering cylinder 30, namely, at the maximum retraction distance of the ball screw 31. The second micro limit switch 60 is provided at the second stroke position L2 of the ball screw, namely, at the maximum extension distance of the ball screw 31. The first micro limit switch 50 and the second micro limit switch 60 may employ a normally closed switch. Upon receiving a switch signal output by the first micro limit switch 50, the motor controller 10 controls the brushless motor body 20 to stop driving the ball screw 31 to move in the first direction, namely, stopping continuing to retract, so as to stop driving the tires to continue rightward steering. Upon receiving a switch signal output by the second micro limit switch 60, the motor controller 10 controls the brushless motor body 20 to stop driving the ball screw 31 to move in the second direction, namely, stopping continuing to extend, so as to stop driving the tires to continue leftward steering. In this way, the positioning control of the maximum angles of the leftward steering and rightward steering of the tires in the aerial work scenarios is realized by the first micro limit switch 50 and the second micro limit switch 60. It may be appreciated that the distance set for the first stroke L1 of the first micro limit switch 50 and the distance set for the second stroke L2 of the second micro limit switch 60 may be determined according to the demands for the maximum angles of the leftward steering and rightward steering of the tires in the aerial work scenario and a stroke relationship of the ball screw 31.

Meanwhile, a Hall sensor 40 is further provided in the present embodiment. Upon receiving the revolution detected by the Hall sensor reaches the first preset revolution, the motor controller 10 controls the brushless motor body 20 to stop driving the ball screw 31 to move in the first direction, namely, stopping continuing to retract, so as to stop driving the tires to continue rightward steering. When the revolution reaches the second preset revolution, the motor controller 10 controls the brushless motor body 20 to stop driving the ball screw 31 to move in the second direction, namely, stopping continuing to extend, so as to stop driving the tires to continue leftward steering. The first preset revolution is determined according to the first stroke L1 and the preset ball screw motion relationship. The second preset revolution is determined according to the second stroke L2 and the preset ball screw motion relationship. The preset ball screw motion relationship may be obtained through an internal structure of the brushless motor body, i.e., the relationship between the revolution of the motor and the extension/retraction length of the ball screw is obtained from the internal structure of the brushless motor body. As such, the precise positioning control of the maximum angles of the leftward steering and rightward steering of the tires in the aerial work scenario is realized through the Hall sensor 40. In addition, in the present embodiment, the steering and positioning control of controlling the brushless motor body 20 to drive the ball screw 31 to move in different directions is jointly achieved by the revolution detected by the Hall sensor 40 in combination with the switch signal output by the first micro limit switch 50 and the switch signal output by the second micro limit switch 60, thereby improving the reliability of steering and positioning in different directions, and avoiding failure to achieve steering and positioning in different directions upon fault in any manner.

Optionally, on the basis of the above embodiment, in further detail and with further reference to FIGS. 1 and 2, controlling, by the motor controller 10, the brushless motor body 20 to stop driving the ball screw 31 to move in the first direction when the revolution reaches the first preset revolution comprises controlling, by the motor controller 10, the brushless motor body 20 to reduce the rotation speed based on a ramp control strategy according to a first preset revolution range so as to control the brushless motor body 20 to stop driving the ball screw 31 to move in the first direction when the revolution reaches the first preset revolution, wherein the first preset revolution range satisfies: (1-1/N1)n1 ≤n≤n1, wherein n1 is the first preset revolution, and N1 is determined based on the first preset revolution n1.

N1 is determined based on the first preset revolution n1. For example, when the first preset revolution n1≥1000r, N1 is a positive integer between 8-15, and when the first preset revolution n1 < 1000r, N1 is a positive integer between 5 and 10. The motor controller 10 controls the brushless motor body 20 to reduce the rotation speed based on the ramp control strategy according to the first preset revolution range, so that when the revolution reaches the first preset revolution, the motor controller 10 controls the brushless motor body 20 to stop driving the ball screw 31 to move in the first direction, thereby reducing occurrence of over-rotation of the driving motor 20 caused by inertia and control delay, so as to further improve the control accuracy of steering and positioning via the Hall sensor.

More specifically, in some embodiments, the motor controller 10 is further configured to control the rotation speed of the brushless motor body to fall to a first preset rotation speed when the revolution reaches a third preset revolution range, wherein the third preset revolution range satisfies: (1-1/N1)n1≤n≤(1-1/(N1+X))n1, wherein X is a positive integer greater than N1.

The motor controller 10 is further configured to control the rotation speed of the brushless motor body to fall to a second preset rotation speed when the revolution reaches a fourth preset revolution range, wherein the fourth preset revolution range satisfies: (1-1/(N1+X))n1<n≤n1.

The motor controller 10 is further configured to control the rotation speed of the brushless motor body to drop to zero when the revolution reaches the first preset revolution so as to control the brushless motor body 20 to stop driving the ball screw 31 to move in the first direction.

The second preset rotation speed is less than the first preset rotation speed. For instance, the second preset rotation speed is 0.3V and the direction is the first direction (V is an original vehicle speed), and the first preset rotation speed is 0.5V, and the direction is the first direction. It may be appreciated that the ramp control strategy may also be adapted to other speed configurations.

Likewise, the controlling, by the motor controller 10, the brushless motor body 20 to stop driving the ball screw 31 to move in the second direction when the revolution reaches the second preset revolution comprises controlling, by the motor controller 10, the brushless motor body to reduce the rotation speed based on the ramp control strategy according to a second preset revolution range so as to control the brushless motor body 20 to stop driving the ball screw 31 to move in the second direction when the revolution reaches the second preset revolution, wherein the second preset revolution range satisfies: (1-1/N2)n2≤n≤n2, wherein n2 is the second preset revolution, and N2 is determined based on the second preset revolution n2.

Likewise, N2 in the second preset revolution range is determined based on the second preset revolution n2. For instance, when the second preset revolution n2 ≥ 1000r, N2 is a positive integer between 8-15. When the second preset revolution n2 <1000r, N2 is a positive integer between 5 and 10. The motor controller 10 controls the brushless motor body 20 to reduce the rotation speed based on the ramp control strategy according to a second preset revolution range, so as to control the brushless motor body 20 to stop driving the ball screw 31 to move in the second direction when the revolution reaches the second preset revolution, thereby reducing occurrence of over-rotation of the driving motor 20 caused by inertia and control delay, so as to further improve the control accuracy of steering and positioning via the Hall sensor.

More specifically, in some embodiments, the motor controller 10 is further configured to control the rotation speed of the brushless motor body to fall to a third preset rotation speed when the revolution reaches a fifth preset revolution range, wherein the fifth preset revolution range satisfies: (1-1/N2)n2≤n≤(1-1/(N2+X))n2, and X is a positive integer greater than N2.

The motor controller 10 is further configured to control the rotation speed of the brushless motor body to fall to a fourth preset rotation speed when the revolution reaches a sixth preset revolution range, wherein the six preset revolution range satisfies: (1-1/(N2+X))n2 < n≤ n2.

The motor controller 10 is further configured to control the rotation speed of the brushless motor body to drop to zero when the revolution reaches the second preset revolution so as to control the brushless motor body to stop driving the ball screw to move in the second direction.

The fourth preset rotation speed is less than the third preset rotation speed. For instance, the fourth preset rotation speed is 0.3V and the direction is the second direction (V is the original vehicle speed). The third preset rotation speed is 0.5V, and the direction is the second direction. That is, the fourth preset rotation speed and the second preset rotation speed are equal in rotation speed value, but the directions are opposite. The third preset rotation speed and the first preset rotation speed are equal in rotation speed value, but the directions are opposite. It may be appreciated that the ramp control strategy may also be adapted to other speed configurations.

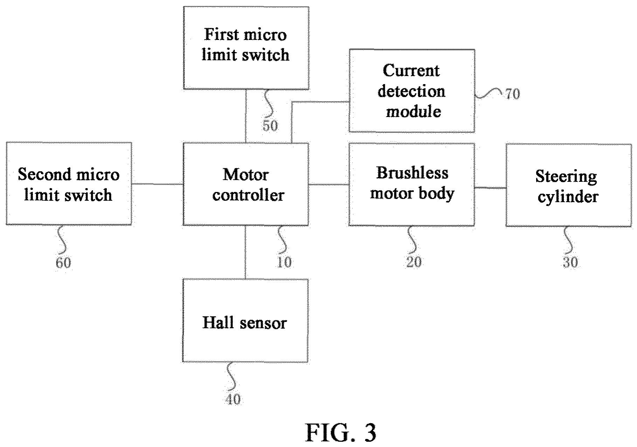

Optionally, FIG. 3 is a schematic view of another brushless motor according to an embodiment of the present invention. As shown in FIG. 3, the brushless motor further comprises a current detection module 70. The current detection module 70 is communicatively connected to the motor controller 10. The current detection module 70 is configured to detect an output current of the brushless motor body 20 in real time and send the output current to the motor controller 10. The motor controller 10 is further configured to control the brushless motor body 20 to stop driving the ball screw 31 to move when the output current reaches a maximum limit current. When the output current reaches the maximum limit current, anomalous conditions such as mechanical seizure, stall condition, or external collision of the brushless motor body might occur, and the motor controller 10 may control the brushless motor body 20 to stop driving the ball screw to move, so as to achieve the positioning protection in the steering and positioning control process.

The motor controller 10 is further configured to control the brushless motor body 20 to stop driving the ball screw to move after the output current reaches a maximum operating current for a preset period of time. The maximum operating current is less than the maximum limit current. After the output current reaches the maximum operating current for the preset period of time, the motor controller 10 controls the brushless motor body 20 to stop driving the ball screw 31 to move, so that the brushless motor body can be protected from heating up and damages caused by the operation with a large current in a long period of time, which is usually caused by situations such as the blocking of the steering mechanism or too bad road conditions. This achieves the positioning protection in the steering and positioning control process.

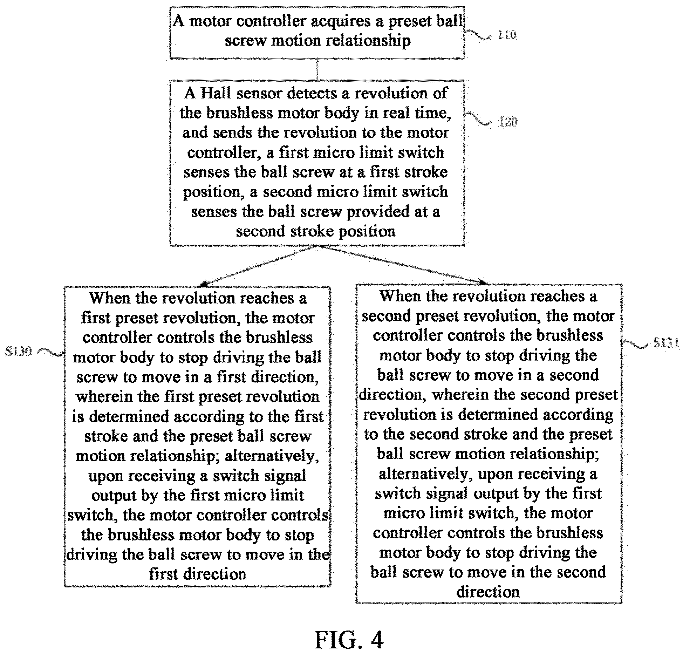

Based on the same inventive concept, an embodiment of the present invention further provides a positioning and steering control method of a brushless motor, which is applied to the brushless motor described in the above embodiment. FIG. 4 is a flow chart of the positioning and steering control method of the brushless motor according to an embodiment of the present invention. As shown in FIG. 4, the method comprises the following steps:

S110: a motor controller acquires a preset ball screw motion relationship.

S120: a Hall sensor detects a revolution of the brushless motor body in real time, and sends the revolution to the motor controller. A first micro limit switch senses the ball screw at a first stroke position. A second micro limit switch senses the ball screw provided at a second stroke position.

S130: when the revolution reaches a first preset revolution, the motor controller controls the brushless motor body to stop driving the ball screw to move in a first direction, wherein the first preset revolution is determined according to the first stroke and the preset ball screw motion relationship. Alternatively, upon receiving a switch signal output by the first micro limit switch, the motor controller controls the brushless motor body to stop driving the ball screw to move in the first direction.

S131: when the revolution reaches a second preset revolution, the motor controller controls the brushless motor body to stop driving the ball screw to move in a second direction, wherein the second preset revolution is determined according to the second stroke and the preset ball screw motion relationship. Alternatively, upon receiving a switch signal output by the first micro limit switch, the motor controller controls the brushless motor body to stop driving the ball screw to move in the second direction.

In the present embodiment, the steering and positioning control of precisely controlling the brushless motor body to drive the ball screw to move in different directions is achieved through the revolution detected by the Hall sensor, and the steering and positioning control of controlling the brushless motor body to drive the ball screw to move in different directions is jointly achieved by the revolution detected by the Hall sensor in combination with the switch signal output by the first micro limit switch and the switch signal output by the second micro limit switch, thereby improving the reliability of steering and positioning in different directions, and avoiding failure to achieve steering and positioning in different directions upon fault in any manner.

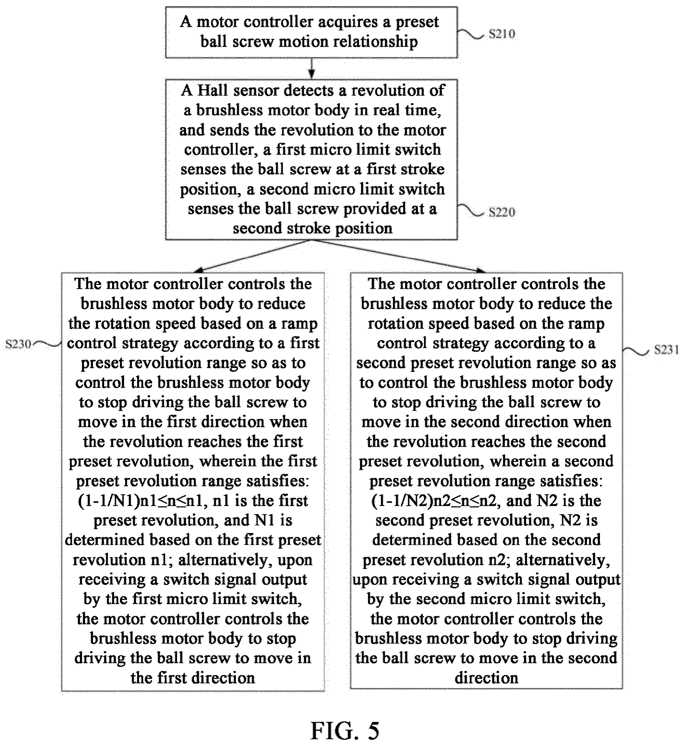

Optionally, in further detail on the basis of the above embodiment of the method, FIG. 5 is a flow chart of a positioning and steering control method of a brushless motor provided by an embodiment of the present invention. As shown in FIG. 5, the method comprises the following steps:

S210: a motor controller acquires a preset ball screw motion relationship.

S220: a Hall sensor detects a revolution of a brushless motor body in real time, and sends the revolution to the motor controller. A first micro limit switch senses the ball screw at a first stroke position. A second micro limit switch senses the ball screw provided at a second stroke position.

S230: the motor controller controls the brushless motor body to reduce the rotation speed based on a ramp control strategy according to a first preset revolution range so as to control the brushless motor body to stop driving the ball screw to move in the first direction when the revolution reaches the first preset revolution, wherein the first preset revolution range satisfies: (1-1/N1)n1≤n≤n1, wherein n1 is the first preset revolution, and N1 is determined based on the first preset revolution n1. Alternatively, upon receiving a switch signal output by the first micro limit switch, the motor controller controls the brushless motor body to stop driving the ball screw to move in the first direction.

Specifically, the ramp control strategy is as follows: controlling the rotation speed of the brushless motor body to fall to a first preset rotation speed when the revolution reaches a third preset revolution range, wherein the third preset revolution range satisfies: (1-1/N1)n1≤n ≤(1-1/(N1+X))n1, and X is a positive integer greater than N1. Controlling the rotation speed of the brushless motor body to fall to a second preset rotation speed when the revolution reaches a fourth preset revolution range, wherein the fourth preset revolution range satisfies: (1-1/(N1+X))n1<n≤n1. Controlling the rotation speed of the brushless motor body to drop to zero when the revolution reaches the first preset revolution so as to control the brushless motor body to stop driving the ball screw to move in the first direction, wherein the second preset rotation speed is less than the first preset rotation speed.

S231: the motor controller controls the brushless motor body to reduce the rotation speed based on the ramp control strategy according to a second preset revolution range so as to control the brushless motor body to stop driving the ball screw to move in the second direction when the revolution reaches the second preset revolution, wherein the second preset revolution range satisfies: (1-1/N2)n2≤n≤n2. N2 is the second preset revolution, and N2 is determined based on the second preset revolution n2. Alternatively, upon receiving a switch signal output by the second micro limit switch, the motor controller controls the brushless motor body to stop driving the ball screw to move in the second direction.

Specifically, the ramp control strategy is as follows: controlling the rotation speed of the brushless motor body to fall to a third preset rotation speed when the revolution reaches a fifth preset revolution range, wherein the fifth preset revolution range satisfies: (1-1/N2)n2≤n ≤(1-1/(N2+X))n2, and X is a positive integer greater than N2. Controlling the rotation speed of the brushless motor body to fall to a fourth preset rotation speed when the revolution reaches a sixth preset revolution range, wherein the six preset revolution range satisfies: (1-1/(N2+X))n2 < n≤n2. Controlling the rotation speed of the brushless motor body to drop to zero when the revolution reaches the second preset revolution so as to control the brushless motor body to stop driving the ball screw to move in second direction, wherein the fourth preset rotation speed is less than the third preset rotation speed.

In addition, during steering and positioning control, the current detection module detects an output current of the brushless motor body in real time and sends the output current to the motor controller. When the output current reaches a maximum limit current, the motor controller controls the brushless motor body to stop driving the ball screw to move. After the output current reaches a maximum operating current for a preset period of time, the motor controller controls the brushless motor body to stop driving the ball screw to move. As such, the positioning protection in the steering and positioning control process is also achieved.

In the present embodiment, on the basis of the above embodiment of the method, the brushless motor body is controlled to stop driving the ball screw to move in different directions based on the ramp control strategy, thereby reducing occurrence of over-rotation of the driving motor caused by inertia and control delay, so as to further improve the control accuracy of steering and positioning via the Hall sensor. The current detection module is configured to achieve the positioning protection in the steering and positioning control process and further improve the reliability of steering and positioning.

An embodiment of the present invention further provides an aerial work vehicle comprising the brushless motor according to the above embodiments. The aerial work vehicle has the advantageous effects stated in the above embodiments. For instance, the aerial work vehicle comprises a scissor lift and an off-road vehicle, which will not be specifically limited in the present embodiment.

It is to be noted that what are described above are only preferred embodiments of the present invention and technical principles applied thereto. It will be understood by those skilled in the art that the present invention is not limited to the specific embodiments described herein, and that those skilled in the art can make various obvious changes, rearrangements and substitutions without departing from the scope of the invention. Therefore, while the present invention has been described in detail through the above embodiments, it is to be understood that the present invention is not limited to the disclosed embodiments, and that the present invention may also include more other equivalent embodiments without departing from the concept of the present invention. The scope of the present invention is determined by the appended claims.

## Claims

1. A brushless motor, wherein the brushless motor comprises a motor controller, a brushless motor body, a steering cylinder, a Hall sensor, a first micro limit switch and a second micro limit switch;
the motor controller is electrically connected to the brushless motor body, the brushless motor body is in meshing connection with the steering cylinder, the first micro limit switch is provided at a first stroke position of a ball screw in the steering cylinder, the second micro limit switch is provided at a second stroke position of the ball screw;
the first micro limit switch and the second micro limit switch are both communicatively connected with the motor controller, the motor controller is configured to control the brushless motor body to stop driving the ball screw to move in a first direction upon receiving a switch signal output by the first micro limit switch and further configured to control the brushless motor body to stop driving the ball screw to move in a second direction upon receiving a switch signal output by the second micro limit switch;
the Hall sensor is communicatively connected to the motor controller, the Hall sensor is configured to detect a revolution of the brushless motor body in real time, and send the revolution to the motor controller;
the motor controller is further configured to control the brushless motor body to stop driving the ball screw to move in the first direction when the revolution reaches a first preset revolution, wherein the first preset revolution is determined according to the first stroke and a preset ball screw motion relationship;
the motor controller is further configured to control the brushless motor body to stop driving the ball screw to move in the second direction when the revolution reaches a second preset revolution, wherein the second preset revolution is determined according to the second stroke and the preset ball screw motion relationship;
wherein controlling, by the motor controller, the brushless motor body to stop driving the ball screw to move in the first direction when the revolution reaches the first preset revolution comprises controlling, by the motor controller, the brushless motor body to reduce the rotation speed based on a ramp control strategy according to a first preset revolution range so as to control the brushless motor body to stop driving the ball screw to move in the first direction when the revolution reaches the first preset revolution, wherein the first preset revolution range satisfies: (1-1/N1)n1≤n≤n1, wherein n1 is the first preset revolution and N1 is determined based on the first preset revolution n1;
controlling, by the motor controller, the brushless motor body to reduce the rotation speed based on a ramp control strategy according to a first preset revolution range so as to control the brushless motor body to stop driving the ball screw to move in the first direction when the revolution reaches the first preset revolution comprises:
controlling, by the motor controller, the rotation speed of the brushless motor body to fall to a first preset rotation speed when the revolution reaches a third preset revolution range, wherein the third preset revolution range satisfies: (1-1/N1)n1≤n≤(1-1/(N1+X))n1, and X is a positive integer greater than N1;
controlling, by the motor controller, the rotation speed of the brushless motor body to fall to a second preset rotation speed when the revolution reaches a fourth preset revolution range, wherein the fourth preset revolution range satisfies: (1-1/(N1+X))n1<n≤n1; and
controlling, by the motor controller, the rotation speed of the brushless motor body to drop to zero when the revolution reaches the first preset revolution so as to control the brushless motor body to stop driving the ball screw to move in the first direction;
wherein the second preset rotation speed is less than the first preset rotation speed;
controlling, by the motor controller, the brushless motor body to stop driving the ball screw to move in the second direction when the revolution reaches the second preset revolution comprises:
controlling, by the motor controller, the brushless motor body to reduce the rotation speed based on the ramp control strategy according to a second preset revolution range so as to control the brushless motor body to stop driving the ball screw to move in the second direction when the revolution reaches the second preset revolution, wherein a second preset revolution range satisfies: (1-1/N2)n2≤n≤n2, wherein n2 is the second preset revolution, and N2 is determined based on the second preset revolution n2;
controlling, by the motor controller, the brushless motor body to reduce the rotation speed based on the ramp control strategy according to a second preset revolution range so as to control the brushless motor body to stop driving the ball screw to move in the second direction when the revolution reaches the second preset revolution comprises:
controlling, by the motor controller, the rotation speed of the brushless motor body to fall to a third preset rotation speed when the revolution reaches a fifth preset revolution range, wherein the fifth preset revolution range satisfies: (1-1/N2)n2≤n≤(1-1/(N2+X))n2, and X is a positive integer greater than N2;
controlling, by the motor controller, the rotation speed of the brushless motor body to fall to a fourth preset rotation speed when the revolution reaches a sixth preset revolution range, wherein the six preset revolution range satisfies: (1-1/(N2+X))n2 < n≤n2; and
controlling, by the motor controller, the rotation speed of the brushless motor body to drop to zero when the revolution reaches the second preset revolution so as to control the brushless motor body to stop driving the ball screw to move in the second direction;
wherein the fourth preset rotation speed is less than the third preset rotation speed.

2. The brushless motor according to claim 1, wherein the brushless motor further comprises a current detection module,
the current detection module is communicatively connected to the motor controller, the current detection module is configured to detect an output current of the brushless motor body in real time and send the output current to the motor controller;
or the motor controller is further configured to control the brushless motor body to stop driving the ball screw to move when the output current reaches a maximum limit current;
the motor controller is further configured to control the brushless motor body to stop driving the ball screw to move after the output current reaches a maximum operating current for a preset period of time.

3. An aerial work vehicle comprising the brushless motor according to any of claims 1-2.

4. A positioning and steering control method of a brushless motor, wherein the method is applied to the brushless motor according to any of claims 1-2, the positioning and steering control method of the brushless motor comprises:
acquiring a preset ball screw motion relationship;
the Hall sensor detects a revolution of the brushless motor body in real time, and sends the revolution to the motor controller, the first micro limit switch senses the ball screw at the first stroke position, the second micro limit switch senses the ball screw provided at the second stroke position;
when the revolution reaches a first preset revolution, the motor controller controls the brushless motor body to stop driving the ball screw to move in a first direction, wherein the first preset revolution is determined according to the first stroke and the preset ball screw motion relationship;
wherein controlling, by the motor controller, the brushless motor body to stop driving the ball screw to move in the first direction when the revolution reaches the first preset revolution comprises:
controlling the brushless motor body to reduce the rotation speed based on a ramp control strategy according to a first preset revolution range so as to control the brushless motor body to stop driving the ball screw to move in the first direction when the revolution reaches the first preset revolution, wherein the first preset revolution range satisfies: (1-1/N1)n1≤n≤ n1, wherein n1 is the first preset revolution, and N1 is determined based on the first preset revolution n1;
controlling the brushless motor body to reduce the rotation speed based on a ramp control strategy according to a first preset revolution range so as to control the brushless motor body to stop driving the ball screw to move in the first direction when the revolution reaches the first preset revolution comprises:
controlling the rotation speed of the brushless motor body to fall to a first preset rotation speed when the revolution reaches a third preset revolution range, wherein the third preset revolution range satisfies: (1-1/N1)n1 ≤n≤(1-1/(N1+X))n1, and X is a positive integer greater than N1;
controlling the rotation speed of the brushless motor body to fall to a second preset rotation speed when the revolution reaches a fourth preset revolution range, wherein the fourth preset revolution range satisfies: (1-1/(N1+X))n1<n≤n1; and
controlling the rotation speed of the brushless motor body to drop to zero when the revolution reaches the first preset revolution so as to control the brushless motor body to stop driving the ball screw to move in the first direction;
wherein the second preset rotation speed is less than the first preset rotation speed;
controlling, by the motor controller, the brushless motor body to stop driving the ball screw to move in the second direction when the revolution reaches a second preset revolution, wherein the second preset revolution is determined according to the second stroke and the preset ball screw motion relationship;
wherein controlling, by the motor controller, the brushless motor body to stop driving the ball screw to move in the second direction when the revolution reaches the second preset revolution comprises:
controlling, by the motor controller, the brushless motor body to reduce the rotation speed based on the ramp control strategy according to a second preset revolution range so as to control the brushless motor body to stop driving the ball screw to move in the second direction when the revolution reaches the second preset revolution, wherein the second preset revolution range satisfies: (1-1/N2)n2≤n≤n2, wherein n2 is the second preset revolution, and N2 is determined based on the second preset revolution n2;
controlling the brushless motor body to reduce the rotation speed based on the ramp control strategy according to a second preset revolution range so as to control the brushless motor body to stop driving the ball screw to move in the second direction when the revolution reaches the second preset revolution comprises:
controlling the rotation speed of the brushless motor body to fall to a third preset rotation speed when the revolution reaches a fifth preset revolution range, wherein the fifth preset revolution range satisfies: (1-1/N2)n2≤n≤(1-1/(N2+X))n2, and X is a positive integer greater than N2;
controlling the rotation speed of the brushless motor body to fall to a fourth preset rotation speed when the revolution reaches a sixth preset revolution range, wherein the six preset revolution range satisfies: (1-1/(N2+X))n2 < n≤n2; and
controlling the rotation speed of the brushless motor body to drop to zero when the revolution reaches the second preset revolution so as to control the brushless motor body to stop driving the ball screw to move in the second direction;
wherein the fourth preset rotation speed is less than the third preset rotation speed;
or the motor controller is configured to control the brushless motor body to stop driving the ball screw to move in a first direction upon receiving a switch signal output by the first micro limit switch, and control the brushless motor body to stop driving the ball screw to move in a second direction upon receiving a switch signal output by the second micro limit switch.

5. The positioning and steering control method of a brushless motor according to claim 4, wherein the method further comprises:
the current detection module detects an output current of the brushless motor body in real time and sends the output current to the motor controller;
when the output current reaches a maximum limit current, the motor controller controls the brushless motor body to stop driving the ball screw to move;
the positioning and steering control method of the brushless motor further comprises:
after the output current reaches a maximum operating current for a preset period of time, the motor controller controls the brushless motor body to stop driving the ball screw to move.
